# EUROPEAN PATENT APPLICATION

(11) **EP 4 694 158 A2**
(43) Date of publication of application: **11.02.2026**
(21) Application number: 24785355.9
(22) Date of filing: 05.04.2024
(51) Int. Cl.: H04N 23/51, H04N 23/55, G03B 17/02

(54) **CAMERA MODULE**

(30) Priority: 05.04.2023 KR 20230044964
(71) Applicant: LG INNOTEK CO. LTD, Gangseo-gu Seoul 07796 (KR)
(72) Inventor: YOON, Kyeong Mok, Seoul 07796 (KR); PARK, Jong Hyun, Seoul 07796 (KR); WOO, Gyung Mok, Seoul 07796 (KR)
(74) Representative: M. Zardi & Co S.A.
(86) International application number: PCT/KR2024/004580
(87) International publication number: WO 2024/210658

(57) **Abstract**

This camera module comprises: a lens holder; a front housing coupled to the lens holder; a rear housing coupled to the front housing; a substrate disposed in the rear housing; and a coupling part disposed between the front housing and the rear housing, wherein; the front housing comprises a first body and a first extension portion protruding from the first body toward the rear housing; the rear housing comprises a second body and a second extension portion protruding from the second body toward the front housing; a first region of the coupling part is disposed between the first body and the second extension portion and the first body and the second extension portion are arranged to be spaced apart from each other.

## Description

### [Technical Field]

The teachings in accordance with exemplary and non-limiting embodiments of the present invention relate generally to a camera module.

### [Background Arts]

Recently, ultra-compact camera modules have been developed and are widely used in small electronic devices such as smartphones, laptops, and gaming consoles.

With the widespread adoption of automobiles, miniature cameras are now extensively employed not only in small electronic devices but also in vehicles. Examples include black box cameras for vehicle protection or providing objective evidence in traffic accidents, rear-view cameras enabling drivers to monitor blind spots via a screen for safer reversing, and perimeter detection cameras for monitoring the vehicle's surroundings.

The camera may comprise a lens, a lens holder accommodating the lens, an image sensor converting an image of a subject gathered by the lens into an electrical signal, and a printed circuit board on which the image sensor is mounted. A housing forming the exterior of the camera is constructed with a fully sealed structure to prevent contamination of the internal components by foreign substances, including moisture.

### [Summary of the Invention]

### [Technical Subject]

The present embodiment is intended to provide a camera module that facilitates easy coupling between multiple housings and prevents heat transfer into the housing's internal space during the assembly process.

### [Technical Solution]

A camera module according to an exemplary embodiment of the present invention may comprise: a lens holder; a front housing coupled to the lens holder; a rear housing coupled to the front housing; a substrate disposed in the rear housing; and a coupling part disposed between the front housing and the rear housing, wherein; the front housing comprises a first body and a first extension portion protruding from the first body toward the rear housing; the rear housing comprises a second body and a second extension portion protruding from the second body toward the front housing; a first region of the coupling part is disposed between the first body and the second extension portion and the first body and the second extension portion are arranged to be spaced apart from each other.

Preferably but not necessarily, the coupling part may include a second region that is connected to the first region and that covers a portion of the first body and the second body.

Preferably but not necessarily, with respect to the optical axis direction, the length of the second region may be greater than the length of the first region.

Preferably but not necessarily, with respect to the direction perpendicular to the optical axis, the length of the first region may be 0.3 to 0.5 times the length of the second extension portion.

Preferably but not necessarily, the thickness of the first region may be between 0.1 mm and 0.3 mm.

Preferably but not necessarily, an outer surface of the first extension portion and an inner surface of the second extension portion may be mutually spaced apart from each other.

Preferably but not necessarily, a side of the substrate and an inner surface of the second extension portion may be mutually spaced apart from each other.

Preferably but not necessarily, the rear housing may be formed by a forging process.

Preferably but not necessarily, an air gap may be formed internally by the first body, the second body, the first extension portion, the substrate, the second extension portion, and the coupling part.

Preferably but not necessarily, the air gap may comprise a first air gap formed between the lower surface of the first body and the second extension portion, a second air gap formed between the outer surface of the first extension portion and the inner surface of the second extension portion, and a third air gap formed between the side surface of the substrate and the inner surface of the second extension portion.

### [Advantageous Effects]

Through the present embodiment, the front housing and rear housing are joined by welding, thereby eliminating components such as screws for coupling between the front and rear housings or sealing members for waterproofing. This offers the advantage of reducing manufacturing costs and simplifying the process by removing the screw coupling step.

Furthermore, it offers the advantage of preventing heat generated during the joining process of the front housing and rear housing from being transferred to the substrate via the air gap.

### [Brief Descriptions of Drawings]

FIG. 1 is a perspective view showing an exterior of a camera module according to an exemplary embodiment of the present invention.
FIG. 2 is an exploded perspective view of a camera module according to an exemplary embodiment of the present invention.
FIG. 3 is a cross-sectional view of a camera module according to an exemplary embodiment of the present invention.
FIG. 4 is an enlarged view of A in FIG. 3.
FIG. 5 is a perspective view of a vehicle according to an exemplary embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

In addition, the terms used in the embodiments of the present invention are intended to explain the embodiments and are not intended to limit the invention. In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention.

Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The 'optical axis direction' used below is defined as the optical axis direction of the lens. Meanwhile, the 'optical axis direction' can be correlated with the 'vertical direction,' 'x-axis direction,' etc.

Hereafter, the present invention will be explained in more detail according to the attached drawings.

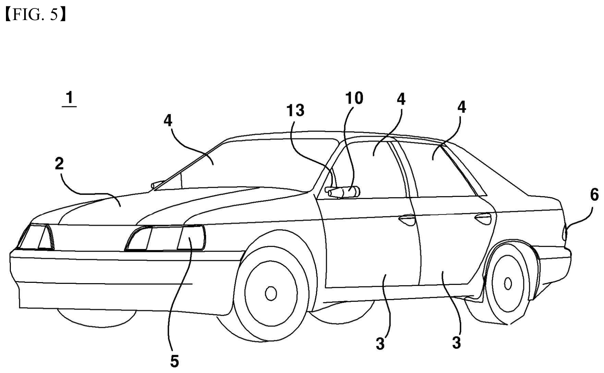

FIG. 5 is a perspective view of a vehicle according to an exemplary embodiment of the present invention.

Referring to FIG. 5, a vehicle (1) according to an embodiment of the present invention may comprise a body (2), a door (3), a glass (4), a headlamp (5), a tail lamp (6), and a camera module (10).

The body (2) may constitute the exterior component of the vehicle (1). The body (2) may adopt various forms, such as a frame type or a monocoque type. One or more of the doors (3) may be coupled to a side of the body (2). Furthermore, the glass (4) may be coupled to the front and rear upper portions (where pillars are formed) of the body (2) and to the door (3). The headlamp (5) may be mounted on the front lower portion of the body (2). The rear portion of the lower part of the body (2) may have the tail lamp (6) mounted thereon.

A camera module (10) may be installed on the side of the body (2) or on one or more of the doors (3), specifically the door positioned at the front portion. The camera module (10) may be installed in front of the glass (4) coupled to the door (3). That is, in the vehicle (1) of this embodiment, the side mirror may be replaced by the camera module (10).

The camera module (10) is capable of capturing images of the rear areas on both sides of the vehicle. The images captured by the camera module (10) may be electrically connected to a display unit (not shown) via an electronic control unit (ECU) or similar. Consequently, the images captured by the camera module (10) may be controlled by the electronic control unit (ECU) and reproduced on the display unit.

An interior space for the driver may be formed within the body (2). A display unit may be installed within the body (2). The display unit may output the images captured by the camera module (10). The display unit may be installed on the dashboard (not shown) within the body (2).

The installation configuration of the camera module (10) within the vehicle (1) described above is exemplary; the camera module (10) may be used for one or more of the vehicle's (1) front camera, side camera, rear camera, and black box.

Hereinafter, the camera module according to this embodiment is described with reference to the drawings.

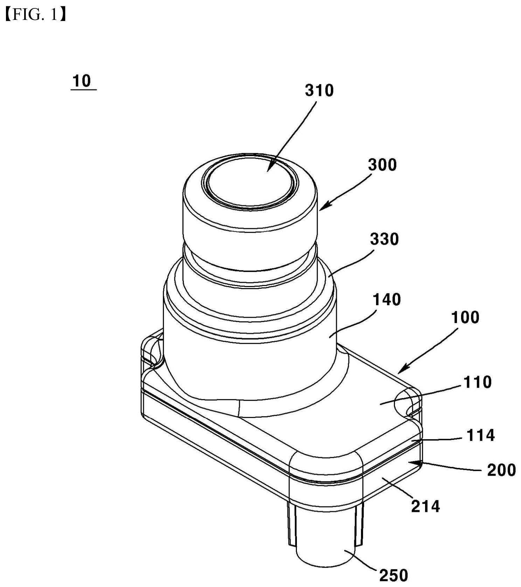

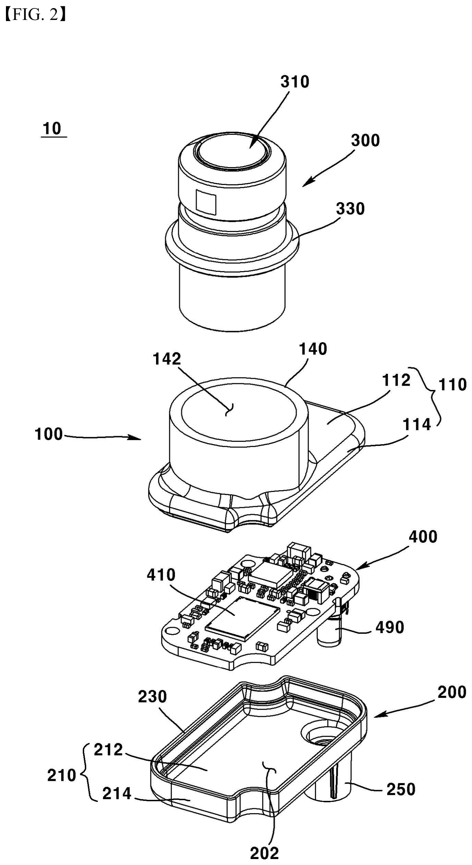

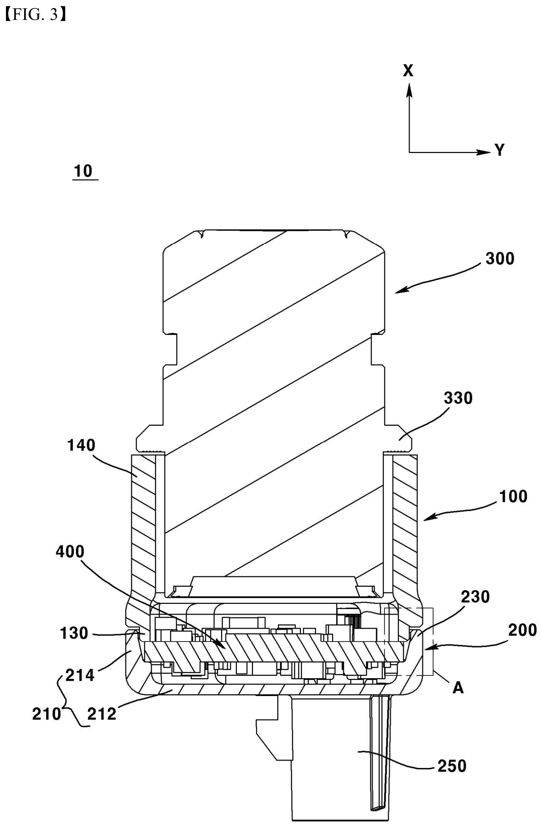

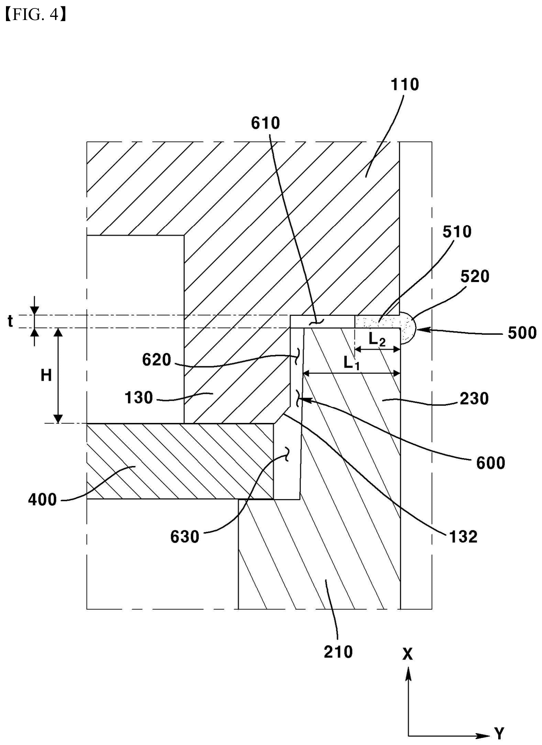

FIG. 1 is a perspective view showing an exterior of a camera module according to an exemplary embodiment of the present invention, FIG. 2 is an exploded perspective view of a camera module according to an exemplary embodiment of the present invention, FIG. 3 is a cross-sectional view of a camera module according to an exemplary embodiment of the present invention, and FIG. 4 is an enlarged view of A in FIG. 3.

Referring to FIGS. 1 to 4, the camera module (10) according to an embodiment of the present invention may comprise a front housing (100), a rear housing (200), a lens holder (300), a substrate (400), and a coupling part (500).

The front housing (100) may form the external shape of the camera module (10) through its coupling with the rear housing (200). The front housing (100) may be termed the first body. Based on the direction of light incidence, the front housing (100) may be disposed forward of the rear housing (200). The front housing (100) may include a first body (110).

The first body (110) may include an upper plate (112) forming the upper surface of the front housing (100), and a first side plate (114) extending downward from the edge of the upper plate (112) to form the sides of the front housing (100). The first body (110) may have a rectangular cross-sectional shape. An internal space may be formed within the first body (110), partitioned from other areas by the lower surface of the upper plate (112) and the inner surface of the first side plate (114).

A barrel portion (140) may be formed on the first body (110), protruding upwardly relative to other regions, with the lens holder (300) being coupled to its inner side. The barrel portion (140) may have a circular cross-section. An internal (hollow) cavity (142) may be formed within the barrel portion (140) to accommodate at least a portion of the lens holder (300). The cavity (142) may communicate with the internal space of the first body (110).

A first extension portion (130) may be formed on the lower surface of the first body (110), projecting downward relative to other areas. The first extension portion (130) may project from the first side plate (114) of the first body (110) towards the rear housing (200). The lower surface of the first extension portion (130) may contact the upper surface of the substrate (400). The lower surface of the first extension portion (130) may be disposed lower than the lower surface of the first side plate (114).

The front housing (100) may be formed from a metallic material. For example, the material of the front housing (100) may be aluminum. The front housing (100) may be formed by a forging process.

The rear housing (200) may form the external shape of the camera module (10) through its combination with the front housing (100). The rear housing (200) may be termed the second body. With respect to the direction of light incidence, the rear housing (200) may be disposed rearward of the front housing (100). The rear housing (200) may include a second body (210).

The second body (210) may include a lower plate (212) forming the lower surface of the rear housing (200), and a second side plate (214) extending upward from the edge of the lower plate (212) to form the side of the rear housing (200). The second body (210) may have a rectangular cross-sectional shape corresponding to the cross-sectional shape of the first body (110). A space (202) may be formed within the second body (210), partitioned from other areas by the upper surface of the lower plate (212) and the inner surface of the second side plate (214). Upon coupling the front housing (100) and the rear housing (200), the outer surface of the first side plate (114) and the outer surface of the second side plate (214) may be so disposed as to form a common plane.

A connector protrusion (250) may be disposed at the lower portion of the second body (210), projecting downward relative to the other regions. A space may be formed within the connector protrusion (250) for a connector (490, described later) to be coupled. An external terminal may be coupled to the connector protrusion (250). Consequently, through the coupling of the external terminal and the connector (490), power may be supplied to the camera module (10), or electrical signals related to operation (driving) may be transmitted and received.

A second extension portion (230, see FIG. 4) may be formed on the upper surface of the second body (210), projecting upwardly relative to other regions. The second extension portion (230) may project from the second body (210) in a direction facing the front housing (100). The second extension portion (230) may have a shape projecting upwards from the upper surface of the second side plate (214). The second extension portion (230) may be disposed such that its upper surface faces the lower surface of the first body (110) in the optical axis direction. The upper surface of the second extension portion (230) may be spaced apart from the lower surface of the first body (110) by a predetermined distance in the optical axis direction. The second extension portion (230) may be disposed on the outer side of the first extension portion (130). The outer surface of the first extension portion (130) and the inner surface of the second extension portion (230) may be spaced apart from each other in a direction perpendicular to the optical axis direction. The side surface of the substrate (400) and the inner surface of the second extension portion (230) may also be disposed to be spaced apart from each other in a direction perpendicular to the optical axis direction.

The optical axis direction length (H) from the upper surface of the substrate (400) to the upper surface of the second extension portion (230) may be 20% or more relative to the thickness of the substrate (400). For example, the optical axis direction length (H) from the upper surface of the substrate (400) to the upper surface of the second extension portion (230) may be 0.2 mm or more.

The rear housing (200) may be formed from a metallic material. For example, the material of the rear housing (200) may be aluminum. The rear housing (200) may be formed by a forging process.

The lens holder (300) may be coupled to the front housing (100). The lens holder (300) may be disposed such that at least a portion is coupled to the barrel portion (140) of the front housing (100), and another portion extends protruding above the barrel portion (140). The lens holder (300) may comprise a barrel and one or more lenses (310) accommodated within said barrel. The lens (310) may be disposed to face the image sensor (410) of said substrate (400) along the optical axis direction. The lens (310) may be optically aligned with the image sensor (410). The lens (310) may be provided in plurality and disposed along the optical axis direction.

A flange (330) may be formed on the outer surface of the lens holder (300), having a shape protruding outwardly relative to other regions. The cross-sectional area of the formed region of the flange (330) may be larger than that of other regions. Upon coupling the lens holder (300) with the front housing (100), the flange (330) may be disposed on the barrel portion (140). A sealing member (not shown) may be disposed between the flange (330) and the barrel portion (140), thereby preventing external contaminants from entering the space within the camera module (10).

The substrate (400) may be disposed within the space (202) of the rear housing (200). The substrate (400) may be a printed circuit board (PCB). The substrate (400) may be formed as a plate configuration having a predetermined thickness relative to the optical axis direction (X).

One or more electronic components for driving the camera module (10) may be disposed on the surface of the substrate (400). For example, an image sensor (410) may be disposed on the upper surface of the substrate (400), and the image sensor (410) may be disposed facing the lens (310) along the optical axis direction. A connector (490) may be mounted on the lower surface of the substrate (400), and external terminals may be electrically connected via the connector (490).

Hereinafter, the coupling structure between the front housing (100) and the rear housing (200) will be described.

The camera module (10) according to the present embodiment may have the front housing (100) and the rear housing (200) coupled by welding. For example, the front housing (100) and the rear housing (200) may be coupled by a laser welding method. The front housing (100) and rear housing (200) may be mutually coupled by welding between the lower surface of the front housing (100) and the upper surface of the rear housing (200), which are disposed facing each other in the optical axis direction. Consequently, components such as screws for fastening the front housing (100) and rear housing (200) together, or sealing members for waterproofing, may be omitted. This offers the advantage of reducing manufacturing costs.

As shown in detail in FIG. 4, a coupling part (500) may be disposed between the front housing (100) and the rear housing (200). The coupling part (500) may be an area formed by welding between the front housing (100) and the rear housing (200). The coupling part (500) may be disposed between the first body (110) and the second body (210).

The coupling part (500) may comprise a first region (510) disposed between the first body (110) and the second extension portion (230), a second region (520) connected to the first region (510) and covering a region of both the first body (110) and the second body (210). The first region (510) may be disposed to overlap the first body (110) and the second extension portion (230) in the optical axis direction. Between the lower surface of the first body (110) and the upper surface of the second extension portion (230), an area where the first region (510) is disposed and an area where the first region (510) is not disposed may be formed. In this case, the lower surface of the first body (110) and the upper surface of the second extension portion (230) may be spaced apart from each other in the optical axis direction within the region where the first area (510) is not disposed.

The second region (520) may be disposed on the outer side of the first region (510) and may be disposed to cover the outer surface of the first body (110) and the outer surface of the second body (210). However, this is illustrative, and the second region (520) may be disposed to cover only one of the outer surfaces of the first body (110) and the second body (210). With respect to the first direction (X) defined along the optical axis, the length of the second region (520) may be formed longer than the length of the first region (510). With respect to the second direction (Y) perpendicular to the optical axis, the length of the first region (510) may be formed longer than the length of the second region (520). The thickness (t) of the first region (510), defined in the optical axis direction, may be between 0.1 mm and 0.3 mm.

The length (L2) of the first region (510) in the second direction (Y) may be between 0.3 and 0.5 times the length (L1) of the second extension portion (230) in the second direction.

Meanwhile, heat generated during the coupling process by welding between the front housing (100) and the rear housing (200) may be transmitted into the internal space, and in this case, damage may occur to the substrate (400).

To prevent this, the camera module (10) may be formed with an air gap (600) spaced apart from the side of the substrate (400) and the coupling area. Specifically, the air gap (600) comprises a first air gap (610) formed between the lower surface of the first body (110) and the upper surface of the second extension portion (230), and a second air gap (620) formed between the outer surface of the first extension portion (130) and the inner surface of the second extension portion (230) and a third air gap (630) formed between the side surface of the substrate (400) and the inner surface of the second extension portion (230), disposed below the second air gap (620). The first to third air gaps (610, 620, 630) may be interconnected. The first air gap (610) may be an area spacing the lower surface of the first body (110) and the upper surface of the second extension portion (230) apart in the optical axis direction. The second air gap (620) may be an area spaced apart in a direction perpendicular to the optical axis between the outer surface of the first extension portion (130) and the inner surface of the second extension portion (230). For example, based on a direction perpendicular to the optical axis, the length of the second air gap (620) may be 0.05 mm to 0.25 mm. The third air gap (630) may be an area spaced apart in a direction perpendicular to the optical axis between the side of the substrate (400) and the inner surface of the second extension portion (230). Based on the direction perpendicular to the optical axis, the length of the third air gap (630) may be formed longer than the length of the second air gap (620). Based on the direction perpendicular to the optical axis, the length of the third air gap (630) may be 0.5 mm.

Meanwhile, as illustrated in FIG. 4, a chamfered surface (132) may be formed at the lower end of the outer surface of the first extension portion (130), which is the connecting region between the second air gap (620) and the third air gap (630), allowing the length in a direction perpendicular to the optical axis to increase progressively from the second air gap (620) towards the third air gap (630).

The air gap (600) with the aforementioned structure offers the advantage of preventing heat generated during the coupling process between the front housing and rear housing from being transferred to the substrate (400).

The foregoing description of the components constituting the embodiments of the present invention as being combined or operating in combination does not imply that the invention is necessarily limited to these embodiments. That is to say, within the scope of the objectives of the present invention, all components may optionally be combined and operate in one or more ways. Furthermore, terms such as "comprising", "including", or "having" as described above, unless specifically stated otherwise, imply that the component may be present and should therefore be interpreted as allowing for the inclusion of other components rather than excluding them. All terms, including technical or scientific terms, unless otherwise defined, have the same meaning as generally understood by a person skilled in the art to which the invention pertains. Commonly used terms, such as those defined in dictionaries, should be interpreted in accordance with their meaning in the context of the relevant technology and, unless explicitly defined herein, should not be interpreted in an idealized or overly formalistic sense.

The foregoing description merely exemplifies the technical concept of the present invention. Those skilled in the art to which the present invention pertains will appreciate that various modifications and variations may be made without departing from the essential character of the invention. Therefore, the embodiments disclosed herein are intended to illustrate the technical concept of the invention, not to limit it, and the scope of the technical concept of the invention is not restricted by these embodiments. The scope of protection of the invention shall be interpreted by the appended claims, and all technical concepts within the scope equivalent thereto shall be interpreted as falling within the scope of the invention.

## Claims

1. A camera module comprising:
a lens holder;
a front housing coupled to the lens holder;
a rear housing coupled to the front housing;
a substrate disposed in the rear housing; and
a coupling part disposed between the front housing and the rear housing,
wherein;
the front housing comprises a first body and a first extension portion protruding from the first body toward the rear housing;
the rear housing comprises a second body and a second extension portion protruding from the second body toward the front housing;
a first region of the coupling part is disposed between the first body and the second extension portion and
the first body and the second extension portion are arranged to be spaced apart from each other.

2. The camera module of claim 1, wherein the coupling part includes a second region that is connected to the first region and that covers a portion of the first body and the second body.

3. The camera module of claim 2, wherein with respect to an optical axis direction, a length of the second region is greater than a length of the first region.

4. The camera module of claim 2, wherein with respect to a direction perpendicular to the optical axis, a length of the first region is 0.3 to 0.5 times a length of the second extension portion.

5. The camera module of claim 1, wherein a thickness of the first region is between 0.1 mm and 0.3 mm.

6. The camera module of claim 1, wherein an outer surface of the first extension portion and an inner surface of the second extension portion are mutually spaced apart from each other.

7. The camera module of claim 6, wherein a side of the substrate and an inner surface of the second extension portion are mutually spaced apart from each other.

8. The camera module of claim 1, wherein the rear housing is formed by a forging process.

9. The camera module of claim 1, wherein an air gap is formed internally by the first body, the second body, the first extension portion, the substrate, the second extension portion, and the coupling part.

10. The camera module of claim 9, wherein the air gap comprises a first air gap formed between a lower surface of the first body and the second extension portion, a second air gap formed between an outer surface of the first extension portion and an inner surface of the second extension portion, and a third air gap formed between a side surface of the substrate and the inner surface of the second extension portion.
